# EUROPÄISCHE PATENTSCHRIFT

(11) **EP 4 220 000 B1**
(45) Veröffentlichungstag und Bekanntmachung des Hinweises auf die Patenterteilung: **23.07.2025**
(21) Anmeldenummer: 23020161.8
(22) Anmeldetag: 14.12.2015
(51) Int. Cl.: F16L 53/38

(54) **BEHEIZBARE MEDIENLEITUNG SOWIE VERFAHREN ZUM HERSTELLEN EINER BEHEIZBAREN MEDIENLEITUNG**
HEATABLE MEDIA LINE AND METHOD FOR PRODUCING A HEATABLE MEDIA LINE
CONDUITE DE FLUIDE POUVANT ÊTRE CHAUFFÉE ET PROCÉDÉ DE FABRICATION D'UNE CONDUITE DE FLUIDE POUVANT ÊTRE CHAUFFÉE

(30) Priorität: 15.12.2014 DE 102014018371
(43) Veröffentlichungstag der Anmeldung: 02.08.2023
(62) Teilanmeldung aus: 15823130.8
(73) Patentinhaber: Voss Automotive GmbH, 51688 Wipperfürth (DE)
(72) Erfinder: SACHSE, Martin, 51688 Wipperfürth (DE); ISENBURG, Marco, 40885 Ratingen (DE); ETSCHEID, Tobias, 51789 Lindlar (DE); PREISS, Oliver, 40882 Ratingen (DE); STELLUTO, Michele, 42859 Remscheid (DE)
(74) Vertreter: Rebbereh, Cornelia

(56) Entgegenhaltungen:
- EP-B1- 3 092 433
- WO-A1-2008/131993
- WO-A1-2015/104218
- DE-A1- 102012 002 411
- DE-A1- 19 844 486
- US-A- 4 194 536
- US-A- 4 553 023
- US-A1- 2003 007 789
- US-A1- 2005 274 713

## Beschreibung

Die Erfindung betrifft eine beheizbare Medienleitung mit einer rohrförmigen Medienleitung, zumindest einem Heizelement in außenseitiger Anordnung auf der rohrförmigen Medienleitung und zumindest einer Fixiereinrichtung zum Fixieren der Position des zumindest einen Heizelements auf der Außenseite der rohrförmigen Medienleitung, eine konfektionierte beheizbare Medienleitung mit einer solchen beheizbaren Medienleitung sowie ein Verfahren zum Herstellen einer solchen beheizbaren Medienleitung, wobei zumindest eine rohrförmige Medienleitung mit zumindest einem Heizelement außenseitig versehen bewickelt wird.

Derartige beheizbare Medienleitungen und Verfahren zu deren Herstellung sind im Stand der Technik bekannt. Diese dienen insbesondere in Fahrzeugen zum Leiten von flüssigen gefrierfähigen bzw. gefriergefährdeten Medien. Die beheizbare Medienleitung weist ein inneres Leitungslumen auf, das von dem Medium durchströmt werden kann. Bei niedrigen Temperaturen droht das durch die beheizbare Medienleitung strömende Medium einzufrieren, so dass es bekannt ist, durch Vorsehen von Heizelementen entlang der Medienleitung und ggf. von mit dieser verbundenen Anschlussbauteilen eine Beheizbarkeit vorzusehen. Unter gefriergefährdeten Medien werden hier Medien verstanden, die aufgrund eines relativ hohen Gefrierpunktes bereits bei noch recht hohen Umgebungstemperaturen zum Gefrieren neigen, wodurch die Funktionsfähigkeit beispielsweise eines Fahrzeug beeinträchtigt oder sogar erheblich gestört werden kann. Ersichtlich ist dies insbesondere bei wasserführenden Medienleitungen ebenso wie bei Medienleitungen, die von einer wässrigen Harnstofflösung als Medium durchströmt werden, wie z.B. AdBlue^{®}, der Fall, die als NOₓ-Reaktionsadditiv für Dieselmotoren mit sogenannten SCR-Katalysatoren eingesetzt wird (SCR = Selektiv Catalytic Reduction). Es wird daher üblicherweise eine Beheizungsmöglichkeit für die Medienleitung bzw. zumindest Teile von dieser und oftmals auch für die Anschlussbauteile vorgesehen, um ein Einfrieren des Mediums innerhalb der konfektionierten beheizbaren Medienleitung zu vermeiden bzw. um ein Auftauen eines bereits eingefrorenen Mediums zu ermöglichen.

Bei Anordnen zumindest eines Heizelementes auf der Außenseite der rohrförmigen Medienleitung wird dieses durch zumindest eine Fixiereinrichtung bezüglich seiner Position auf der Außenseite der rohrförmigen Medienleitung fixiert, um ein Ändern der Position des Heizelements und dadurch eine Änderung der Beheizbarkeit der Medienleitung bzw. durch diese hindurch strömenden Mediums zu vermeiden. Zum Fixieren des zumindest einen Heizelementes auf der Außenseite der rohrförmigen Medienleitung ist es bekannt, ein Klebe-, Gewebe- oder Gewebeklebeband zu verwenden, das insbesondere dem Verlauf des zumindest einen Heizelementes folgend über diesem angeordnet und auf der Außenseite der rohrförmigen Medienleitung klebend haftet.

Derartige rohrförmige und mit zumindest einem Heizelement versehene Medienleitungen werden üblicherweise als Endlosware vorkonfektioniert und bedarfsgerecht abgelängt und endseitig mit zumindest einem Leitungsverbinder versehen, um die so hergestellte und fertig konfektionierte beheizbare Medienleitung beispielsweise mit einem Aggregat oder einer anderen Medienleitung verbinden zu können. Zum Befestigen des zumindest einen Leitungsverbinders endseitig an der abgelängten Medienleitung und insbesondere zum Kontaktieren des zumindest einen Heizelementes, das außenseitig auf der Medienleitung angeordnet ist, ist es üblicherweise erforderlich, die Fixiereinrichtung zumindest teilweise von der Außenseite der Medienleitung und des Heizelementes, insbesondere von dessen außenseitiger Isolierummantelung, zu entfernen. Soll eine Laserschweißverbindung zum Verbinden der rohrförmigen Medienleitung mit einem Leitungsverbinder, insbesondere Steckverbinder, vorgesehen werden, ergeben sich Probleme im Hinblick auf das Laserschweißen, sofern nach dem Entfernen der Fixiereinrichtung noch Reste von Fixiermittel, insbesondere Kleberreste, auf der rohrförmigen Medienleitung verblieben sind. Dementsprechend ist es üblicherweise erforderlich, derartige Reste von Fixiermittel, insbesondere Kleberreste, von der Außenseite der rohrförmigen Medienleitung nach dem Entfernen der Fixiereinrichtung in einem weiteren Bearbeitungsschritt ebenfalls noch zu entfernen. Dies erweist sich allerdings als aufwendig und führt ferner zu zusätzlichen Kosten bei der Konfektionierung einer beheizbaren Medienleitung mit zumindest einem Leitungsverbinder bei Vorsehen einer Laserverschweißung an der oder den Verbindungsstelle(n). Unter dem Konfektionieren einer Medienleitung wird die Endstufe der Herstellung einer einbaufertigen beheizbaren Medienleitung verstanden, wobei die beheizbare Medienleitung endseitig mit zumindest einem Leitungsverbinder verbunden wird, so dass sie nachfolgend beispielsweise in ein Kraftfahrzeug eingebaut werden kann. Durch das Erfordernis eines Reinigungsprozesses zum Entfernen von Resten von Fixiermittel, wie Kleberresten, von der Außenseite der rohrförmigen Medienleitung vor deren Konfektionieren mit zumindest einem Leitungsverbinder, wenn dabei eine Laserschweißverbindung vorgesehen werden soll, dauert die Herstellung einer konfektionierten beheizbaren Medienleitung dementsprechend länger und ist aufwendiger als dies bei Vorsehen einer anderen Verbindung von rohrförmiger Medienleitung und Leitungsverbinder der Fall ist, bei der ein Entfernen von Resten von Fixiermittel, insbesondere Kleberresten, nicht erforderlich ist.

Aus der US 4 194 536 A ist ein Verbundrohrprodukt, das zumindest eine rohrförmige Fluidleitung, eine Anzahl von Iagenartigen Schichten aus flexiblen, feuerfesten, wenig Chlor enthaltenden Glasfaserelementen mit geringem Volumen, enthalten in einem Harzbinder, enthält, bekannt, wobei jede der Schichten um die andere und um die Leitung gewunden ist, um ein thermisch isolierendes Barriereelement um die Leitung zu bilden. Eine Heizleitung ist spiralförmig und wärmeübertragend auf der rohrförmigen Fluidleitung angeordnet. In Anordnung auf den Leitern und der Leitung ist ein Binderelement angeordnet, das vorzugsweise die Leiter und die Leitung in einem miteinander zusammenhängenden Kontakt hält. Das Binderelement kann eine Mylar-Folie sein. Der vorliegenden Erfindung liegt daher die Aufgabe zugrunde, eine beheizbare Medienleitung sowie ein Verfahren zum Herstellen einer solchen beheizbaren Medienleitung vorzusehen, bei der bzw. dem die vorstehend genannten Probleme nicht mehr auftreten, mittels derer also auch bei einem gewünschten Laserschweißverbinden der beheizbaren Medienleitung mit einem endseitig an diese anzufügenden Leitungsverbinder ein vergleichsweise einfacheres und schnelleres Konfektionieren möglich ist als bislang.

Die Aufgabe wird durch eine beheizbare Medienleitung nach Anspruch 1 gelöst. Es ist zumindest ein hochtemperaturfestes Folienelement aus einem Polymermaterial, das beschädigungsfrei Temperaturen von 150 °C und mehr aussetzbar ist, vorgesehen und auf der Außenseite der mit dem zumindest einen Heizelement bewickelten rohrförmigen Medienleitung angeordnet, wobei das hochtemperaturfeste Folienelement als Fixiereinrichtung zum Fixieren des zumindest einen Heizelementes auf der Außenseite der rohrförmigen Medienleitung dient und zum Verhindern eines Anhaftens von Fixiermittel auf der Außenseite der rohrförmigen Medienleitung. Für ein Verfahren zum Herstellen einer solchen beheizbaren Medienleitung wird die Aufgabe durch ein Verfahren nach Anspruch 7 gelöst. Auf der Außenseite der rohrförmigen Medienleitung wird über der Bewicklung von dieser mit zumindest einem Heizelement zumindest ein hochtemperaturfestes Folienelement aus einem Polymermaterial, das beschädigungsfrei Temperaturen von 150 °C und mehr aussetzbar ist, aufgebracht. Weiterbildungen der Erfindung sind in den abhängigen Ansprüchen definiert.

Dadurch werden eine beheizbare Medienleitung mit einer rohrförmigen Medienleitung, zumindest einem Heizelement und zumindest einer Fixiereinrichtung sowie ein Verfahren zum Herstellen einer solchen beheizbaren Medienleitung geschaffen, bei der bzw. dem zumindest ein hochtemperaturfestes Folienelement über der Bewicklung der rohrförmigen Medienleitung mit dem zumindest einen Heizelement aufgebracht wird, um zu verhindern, dass Fixiermittel bzw. adhäsives Fixiermittel, wie Klebemittel, von der Fixiereinrichtung auf die Außenseite der rohrförmigen Medienleitung und/oder des zumindest einen Heizelements gelangt. Unter einem hochtemperaturfesten Folienelement wird ein Folienelement verstanden, das beschädigungsfrei Temperaturen von 150 °C und mehr ausgesetzt werden kann. Dies erweist sich beim Einbau einer solchen beheizbaren Medienleitung bzw. konfektionierten Medienleitung in einem Heißbereich eines Fahrzeugs, wie im Bereich des Fahrzeugmotors, als vorteilhaft, da dort im Betrieb des Fahrzeugs entsprechend hohe Temperaturen auftreten (können).

Durch das Vorsehen des hochtemperaturfesten Folienelements ist es möglich, die Außenseite der rohrförmigen Medienleitung vor dem Anhaften von Fixiermittel, wie Klebemittel, der Fixiereinrichtung zu schützen. Das hochtemperaturfeste Folienelement verhindert insofern einen Kontakt von Fixiermittel der Fixiereinrichtung mit der Außenseite der rohrförmigen Medienleitung und/oder einer äußeren Isolierummantelung des zumindest einen Heizelementes, also dessen Außenseite. Dementsprechend ist es nicht mehr erforderlich, zum Laserschweißverbinden der rohrförmigen Medienleitung mit einem Leitungsverbinder zum Konfektionieren der beheizbaren Medienleitung von der Außenseite der rohrförmigen Medienleitung und/oder der Isolierummantelung des zumindest einen Heizelementes nach dem Ablösen einer Fixiereinrichtung insbesondere in Form eines Klebe-, Gewebe- oder Gewebeklebebandes deren Reste des Fixiermittels, insbesondere Klebemittelreste, aufwendig zu entfernen. Da durch das Zwischenfügen des hochtemperaturfesten Folienelementes zwischen die Fixiereinrichtung und die Außenseite der rohrförmigen Medienleitung und/oder die Außenseite einer Isolierummantelung des zumindest einen Heizelementes kein Fixiermittel, wie Klebemittel, mehr gelangt, ist auch kein aufwendiger Reinigungsprozess zum Entfernen derartiger Reste eines Fixiermittels, wie Klebemittels, von dort mehr erforderlich. Der Fertigungsprozess bzw. der Konfektionierungsprozess der beheizbaren Medienleitung mit zumindest einem endseitig an dieser angeordneten bzw. anzuordnenden Leitungsverbinder wird dadurch vereinfacht und auch kostengünstiger, da der zusätzliche Aufwand zum Entfernen von Fixiermittelresten, wie Klebemittelresten, entfällt.

Das zumindest eine hochtemperaturfeste Folienelement ist auf der Außenseite der mit dem zumindest einen Heizelement bewickelten rohrförmigen Medienleitung angeordnet. Die zumindest eine Fixiereinrichtung kann dementsprechend über dem hochtemperaturfesten Folienelement angeordnet sein oder werden. Hierdurch wird sichergestellt, dass die insbesondere als Klebe-, Gewebe- oder Gewebeklebeband ausgebildete Fixiereinrichtung die Außenseite der rohrförmigen Medienleitung nicht berührt, somit die Klebeschicht bzw. das Fixiermittel der Fixiereinrichtung nicht mit der Außenseite der rohrförmigen Medienleitung in Kontakt tritt. Da das zumindest eine Heizelement unter dem hochtemperaturfesten Folienelement angeordnet ist, tritt die zumindest eine Fixiereinrichtung insbesondere in Form eines Klebe-, Gewebe- oder Gewebeklebebandes mit diesem ebenfalls nicht in Kontakt, kann sich jedoch außen auf dem Folienelement entlang dem zumindest einen Heizelement erstrecken, kann also dem Verlauf des zumindest einen Heizelementes bzw. der Bewicklung mit dem zumindest einen Heizelement auf der Außenseite des hochtemperaturfesten Folienelementes folgen.

Das hochtemperaturfeste Folienelement wird auf der Außenseite der rohrförmigen Medienleitung und der Bewicklung von dieser mit dem zumindest einen Heizelement so fest aufgebracht, dass hierdurch auch zugleich eine Fixierung der Position des zumindest einen Heizelements auf der rohrförmigen Medienleitung ermöglicht wird. Das zusätzliche Vorsehen einer Fixiereinrichtung kann entfallen. Hierbei wird das hochtemperaturfeste Folienelement so fest bzw. eng über dem zumindest einen außenseitig die rohrförmige Medienleitung umgebenden Heizelement angeordnet, dass zur Fixierung desselben auf der Außenseite der rohrförmigen Medienleitung keine weitere Fixiereinrichtung erforderlich ist. Das hochtemperaturfeste Folienelement dient als Fixiereinrichtung zum Fixieren des zumindest einen Heizelementes auf der Außenseite der rohrförmigen Medienleitung. In Abhängigkeit davon, wie fest bzw. eng umgebend das hochtemperaturfeste Folienelement auf der Außenseite von rohrförmiger Medienleitung mit Heizelementumwicklung angeordnet ist oder wird, kann somit das zusätzliche Vorsehen einer Fixiereinrichtung insbesondere in Form eines Klebe-, Gewebe- oder Gewebeklebebandes entfallen.

Vorteilhaft kann jedoch endseitig oder endseitig und im mittleren Bereich der mit dem zumindest einen Heizelement und dem zumindest einen hochtemperaturfesten Folienelement versehenen rohrförmigen Medienleitung eine Fixierung des hochtemperaturfesten Folienelements durch zumindest ein adhäsives Fixierband vorgesehen sein. Es wird somit nicht vollständig entlang der Längserstreckung der Bewicklung mit dem hochtemperaturfesten Folienelement auf dessen Außenseite eine Fixiereinrichtung in Form eines insbesondere als Klebe-, Gewebe- oder Gewebeklebeband ausgebildeten Fixierbandes angeordnet, sondern lediglich im endseitigen Bereich der beheizbaren Medienleitung und ggf. auch im mittleren Bereich von dieser. Zum Konfektionieren der beheizbaren Medienleitung wird die mit den Heizelementen und dem hochtemperaturfesten Folienelement vorkonfektionierte Medienleitung zunächst in einer vorgebbaren Länge, die von Fall zu Fall unterschiedlich sein kann, abgelängt, das hochtemperaturfeste Folienelement in zumindest einem vorgebbaren Abschnitt durch zumindest ein adhäsives Fixierband gegen ein Lockern und/oder Ablösen gesichert, das hochtemperaturfeste Folienelement endseitig bis zu dem adhäsiven Fixierband entfernt und das zumindest eine Heizelement freigelegt und bis zum adhäsiven Fixierband rückgewickelt. Zum Verhindern eines Lockerns und/oder Ablösens des hochtemperaturfesten Folienelements entlang der zu verwendenden beheizbaren Medienleitung wird insbesondere in einem endseitigen Abschnitt oder Bereich und in einem mittleren Abschnitt oder Bereich der beheizbaren Medienleitung das adhäsive Fixierband zum Verhindern eines Lockerns und/oder Ablösens des hochtemperaturfesten Folienelements auf dieses aufgebracht. Insbesondere können zwei adhäsive Fixierbänder in Längsrichtung der beheizbaren Medienleitung nebeneinander mit Abstand zueinander oder überlappend aufgebracht werden. Das näher am Ende der beheizbaren Medienleitung bzw. deren freigelegten rohrförmigen Medienleitung angeordnete erste adhäsive Fixierband dient dabei der Refixierung des hochtemperarturfesten Folienelements und des zumindest einen Heizelementes auf der rohrförmigen Medienleitung. Das hierzu benachbarte zweite adhäsive Fixierband dient lediglich der Refixierung des hochtemperaturfesten Folienelementes, um ein unbeabsichtigtes Lockern und/oder Ablösen desselben von der Außenseite der beheizbaren Medienleitung bzw. der rohrförmigen Medienleitung mit den darauf gewickelten Windungen des zumindest einen Heizelementes zu verhindern. Im Prinzip reicht bereits dieses zweite adhäsive Fixierband aus, um eine Refixierung des hochtemperaturfesten Folienelementes auf der Außenseite der mit dem zumindest einen Heizelement bewickelten bzw. versehenen rohrförmigen Medienleitung vorzusehen. Das näher am Ende der beheizbaren Medienleitung angeordnete adhäsive Fixierband kann dementsprechend auch weggelassen werden. Sind zwei nebeneinander angeordnete Fixierbänder vorgesehen, kann ein geringfügiger Spalt oder eine geringfügige Überdeckung zwischen diesen vorgesehen, beispielsweise ein Spalt von 0 mm bis 2,5 mm bzw. eine Überlappung von 0 mm bis 2,5 mm bei einer Fixierbandbreite von beispielsweise 9 mm +/- 1 mm bzw. 15 mm +/- 1 mm. Insbesondere ist zumindest eines der beiden adhäsiven Fixierbänder als Gewebeklebeband ausgebildet.

Das Folienelement kann jeweils durch spiralförmiges Wickeln und/oder axial gefaltet eingezogen auf der rohrförmigen Medienleitung über der Heizelementbewicklung aufgebracht werden. Zum axial gefalteten Aufbringen kann ein Hilfsmittel verwendet werden, das ein seitliches Einfalten des Folienelements in dessen Axial- bzw. Längsrichtung ermöglicht, ähnlich wie für Kabelummantelungen durch einen sog. Tape Former der Firma TapeFormers.com, Leicester, England, bekannt. Das Folienelement kann ferner in einer Wendelwickelanlage auf die rohrförmige Medienleitung über dem zumindest einen Heizelement aufgebracht werden.

Das hochtemperaturfeste Folienelement kann axial eingefaltet auf rohrförmiger Medienleitung und dem zumindest einen Heizelement angeordnet und auf dem Folienelement die Fixiereinrichtung in Form eines eine adhäsive Oberfläche aufweisenden Bandes, wie eines Klebe-, Gewebe- oder Gewebeklebebandes, außen axial eingeführt werden, wobei es überlappend aufgebracht und mit dem Folienelement verklebt wird, mit einer Steigung in Längsrichtung von bis zu 60 mm. Das Aufbringen des zumindest einen Folienelementes auf der Außenseite der mit dem zumindest einen Heizelement versehenen rohrförmigen Medienleitung kann in der gleichen Station wie das Aufbringen der Fixiereinrichtung in sequentieller Abfolge erfolgen. Ebenfalls ist es möglich, das Folienelement in einer ersten Station aufzubringen und die Fixiereinrichtung in einer nachfolgenden zweiten Station.

Ferner ist eine Herstellung der beheizbaren Medienleitung in einem Endlosprozess möglich, wobei die rohrförmige Medienleitung auf einer Spule gewickelt vorgehalten und je nach Ausführungsvariante mit dem zumindest einen Heizelement, insbesondere in Form einer Heizlitze, und dem Folienelement sowie ggf. der Fixiereinrichtung versehen wird.

Das hochtemperaturfeste Folienelement besteht aus einem Polymermaterial, insbesondere Polyethylenterephthalat (PET). Polyethylenterephthalat hat dabei üblicherweise eine Betriebstemperatur von Ts ≤ 180 °C. In der Schmelze weist PET eine Temperatur von 250 °C auf. Das Vorsehen eines hochtemperaturfesten Folienelementes erweist sich bei den auftretenden Temperaturen einerseits im Betrieb einer konfektionierten beheizbaren Medienleitung und andererseits beim Formbiegen der konfektionierten beheizbaren Medienleitung als vorteilhaft, um die ausreichende Temperaturbeständigkeit aufzuweisen und ein Degenerieren des Folienelementes zu vermeiden. Die PET-Folie kann transparent und biaxial orientiert sein.

Das Folienelement kann beispielsweise eine Materialdicke von 20 µm und eine Schrumpfrate bei 150 °C von > 0,5 %, insbesondere > 1,5 %, vorzugsweise 2 % aufweisen. Für das Formbiegen wird üblicherweise die gesamte konfektionierte beheizbare Medienleitung in eine Beheizungseinrichtung, wie einen Ofen, eingelegt und darin erwärmt, insbesondere auf eine Temperatur von etwa 150 °C. Nachfolgend wird die konfektionierte beheizbare Medienleitung in die gewünschte Form gelegt bzw. eingelegt und hierin abgekühlt, um die eingestellte Formgebung zu stabilisieren.

Außer dem Schrumpfen während des Formbiegeprozesses der beheizbaren Medienleitung kann auch ein gesonderter Prozessschritt zum Schrumpfen des zumindest einen hochtemperaturfesten Folienelementes vorgesehen werden, beispielsweise um bei Weglassen einer zusätzlichen Fixiereinrichtung die Positionierung des oder der Heizelemente auf der Außenseite der rohrförmigen Medienleitung fixieren zu können. Das hochtemperaturfeste Folienelement ist nicht lose auf Heizelement und rohrförmiger Medienleitung angeordnet, sondern dort aufgeschrumpft und dementsprechend eng angelegt an die Außenseite des zumindest einen Heizelements, insbesondere von dessen Isolierummantelung, und der rohrförmigen Medienleitung.

Durch das hochtemperaturfeste Folienelement ist ein zusätzlicher äußerer Schutz gegen Durchscheuern sowohl für die mit einer Isolierummantelung versehenen Heizelemente als auch die rohrförmige Medienleitung möglich. Über die Auswahl der Materialdicke des hochtemperaturfesten Folienelementes und den Grad der Überlappung beim Bewickeln der rohrförmigen Medienleitung mit oder ohne darüber angeordneten Heizelement(en) kann die erzielbare Abriebfestigkeit eingestellt werden. Insbesondere ist das Folienelement jedoch bezüglich seiner Materialstärke dünner ausgebildet als die Fixiereinrichtung, insbesondere in Form eines mit adhäsiver Oberfläche versehenen Bandes, insbesondere eines Klebe-, Gewebe- oder Gewebeklebebandes. Die dennoch erzielbare Abriebfestigkeit sorgt dafür, dass im Betrieb die Fixierung des oder der Heizelemente auf der Außenseite der rohrförmigen Medienleitung nicht beispielsweise durch Scheuern eines zur außenseitigen Isolierung der beheizbaren Medienleitung vorgesehenen Hüllrohres, insbesondere Wellrohres, zerstört wird. Das zumindest eine hochtemperaturfeste Folienelement kann zum Erzielen einer Abriebfestigkeit insbesondere mit einer Überlappung von 0 bis 90 %, bevorzugt 0 bis 80 %, insbesondere 0 bis 50 %, gewickelt werden. Ferner ist es möglich, die Schrumpfrate des hochtemperaturfesten Folienelementes dahingehend anzupassen, dass eine ausreichende Materialstärke nach dem Schrumpfen verbleibt, um eine ausreichend Abriebfestigkeit auch bei einem auf dem Folienelement scheuernden Hüllrohr sicherzustellen.

Zum Verbinden der beheizbaren Medienleitung mit einem Leitungsverbinder, also zum Konfektionieren der Medienleitung, wird zunächst die, wie vorstehend beschrieben, auf einer Spule bevorratete rohrförmige Medienleitung mit Heizelement(en) und Folienelement(en) sowie ggf. Fixiereinrichtung versehen als beheizbare Medienleitung vorkonfektioniert, auf eine gewünschte Länge abgelängt, das Folienelement endseitig von der rohrförmigen Medienleitung entfernt, der Leitungsverbinder aufgefügt und durch insbesondere Laserschweißen dort befestigt. Das zumindest eine hochtemperaturfeste Folienelement kann zum erleichterten Entfernen mit einer Perforation im Bereich von Schnittkanten vorgesehen werden, um ein besseres manuelles Abtrennen eines Abschnitts des hochtemperaturfesten Folienelements im Endbereich bzw. an den Enden der rohrförmigen Medienleitung zu ermöglichen. Hierdurch kann das hochtemperaturfeste Folienelement schnell und unkompliziert im Endbereich der rohrförmigen Medienleitung entfernt werden. Selbstverständlich kann auch ein anderweitiges Abtrennen des zu entfernenden Abschnitts des Folienelements, wie z.B. durch Einschneiden und Abschneiden, vorgesehen werden. Das hochtemperaturfeste Folienelement lässt sich somit leicht händisch entfernen, wobei dies durch geeignete Wahl der Materialdicke und/oder Beschaffenheit des Folienelements und die genannte Perforation, insbesondere Zackenperforation, an den Schnittkanten bzw. Trennkanten des Folienelements unterstützt werden kann.

Somit ist es vorteilhaft möglich, ein hochtemperaturfestes Folienelement einerseits vorzusehen, um einen Übertrag von Fixiermittel, wie Klebemittel, von der zumindest einen Fixiereinrichtung insbesondere in Form eines mit einer adhäsiven Oberfläche versehenen Bandes, wie eines Klebe-, Gewebe- oder Gewebeklebebandes, auf die Außenseite der rohrförmigen Medienleitung und/oder die Außenseite der Heizelemente, insbesondere von deren außenseitiger Isolierummantelung, zu verhindern und andererseits das zumindest eine Heizelement auf der Außenseite der rohrförmigen Medienleitung zu fixieren, wobei im letzteren Falle das Vorsehen einer zusätzlichen Fixiereinrichtung insbesondere in Form eines Klebe-, Gewebe- oder Gewebeklebebandes entfallen kann. Dadurch, dass kein Fixiermittelübertrag, insbesondere Klebemittelübertrag, auf die Außenseite der rohrförmigen Medienleitung stattfindet, ist kein Reinigungsprozess erforderlich, was zu einer Kostenersparnis führt. Ferner können potentielle Leckagen durch undichte Laserschweißverbindungen vermieden werden, die ansonsten im Stand der Technik aufgrund von nicht vollständig von der Außenseite der rohrförmigen Medienleitung entfernten Fixiermittelresten, wie Kleberresten, auftreten können. Ein diesbezüglich geringerer Ausschuss führt ebenfalls zu einer Kostenersparnis gegenüber dem bislang praktizierten Verfahren des Entfernens von Fixiermittelresten, wie Kleberresten, von der Außenseite der rohrförmigen Medienleitung.

Zur näheren Erläuterung der Erfindung werden im Folgenden Ausführungsbeispiele von dieser näher anhand der Zeichnungen beschrieben. Diese zeigen in:
- Figur 1: eine Längsschnittansicht durch eine nicht erfindungsgemäße beheizbare Medienleitung mit direkt auf der rohrförmigen Medienleitung aufgebrachtem hochtemperaturfesten Folienelement,
- Figur 2: eine Querschnittsansicht durch eine Ausführungsform einer erfindungsgemäßen beheizbaren Medienleitung, wobei ein hochtemperaturfestes Folienelement außenseitig sowohl zwei Heizelemente als auch eine rohrförmige Medienleitung umgibt,
- Figur 3: eine Querschnittsansicht durch eine Ausführungsform einer beheizbaren Medienleitung, wobei ein hochtemperaturfestes Folienelement außenseitig auf rohrförmiger Medienleitung und auf dieser aufgewickelten Heizelementen angeordnet ist, außenseitig umwickelt von einer Fixiereinrichtung in Form eines Klebebandes,
- Figur 4: eine Querschnittsansicht durch eine Ausführungsvariante einer beheizbaren Medienleitung, bei der eine rohrförmige Medienleitung mit außenseitiger Bewicklung mit zwei Heizelementen vorgesehen ist, wobei die beiden Heizelemente durch eine Fixiereinrichtung in Form eines Klebebandes bezüglich ihrer Positionierung auf der rohrförmigen Medienleitung fixiert sind, wobei die Kleberschicht des Klebebandes nach außen weg von der rohrförmigen Medienleitung weist und wobei ein hochtemperaturfestes Folienelement außenseitig über dem Klebeband angeordnet ist, und
- Figur 5: eine Skizze einer Aufbereitung eines Endes einer erfindungsgemäßen beheizbaren Medienleitung, um dieses für das Konfektionieren mit einem Leitungsverbinder vorzubereiten.

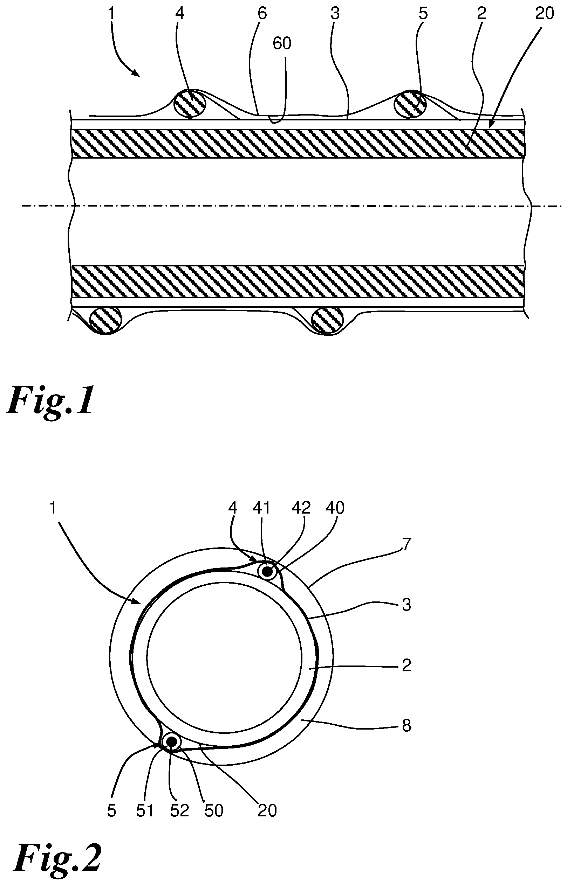

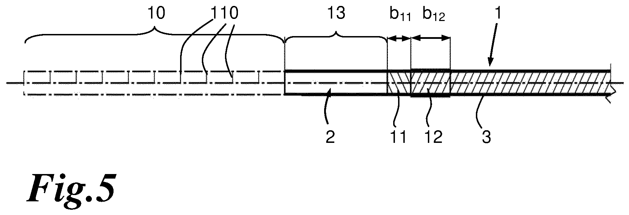

Figur 1 zeigt einen Ausschnitt einer beheizbaren Medienleitung 1, die eine rohrförmige Medienleitung 2 umfasst. Die rohrförmige Medienleitung 2 umgebend ist ein hochtemperaturfestes Folienelement 3 angeordnet. Dieses kann axial eingefaltet eingezogen oder spiralförmig um die rohrförmige Medienleitung herum gewickelt sein. Über dem Folienelement sind zwei Heizelemente 4,5 spiralförmig gewickelt angeordnet. Um diese Position zu fixieren, ist ferner außenseitig über den Heizelementen 4,5 eine Fixiereinrichtung 6 angeordnet, die in Form eines Klebe-, Gewebe- oder Gewebeklebebandes ausgebildet ist. Die Fixiereinrichtung 6 ist mit ihrer Klebeseite, also ihrer adhäsiven Oberfläche 60, in Richtung des Folienelements 3 sowie der jeweiligen Außenseite der Heizelemente 4,5 angeordnet und mit diesen verklebt. Durch das Anordnen des hochtemperaturfesten Folienelementes 3 in Überdeckung der rohrförmigen Medienleitung 2 gelangt die adhäsive Oberfläche bzw. das Klebemittel der Fixiereinrichtung 6 nicht auf die Außenseite 20 der rohrförmigen Medienleitung. Dementsprechend ist es nach Ablängen der beheizbaren Medienleitung 1 in einer gewünschten Länge, um diese mit Leitungsverbindern, wie beispielsweise Steckverbindern, konfektionieren zu können, möglich, diese ohne eine Nachbearbeitung zum Entfernen von Kleberresten von der Oberfläche bzw. der Außenseite 20 der rohrförmigen Medienleitung 2 an den Enden von dieser z.B. durch Laserschweißen anzubringen. Figur 5 ist eine abgelängte beheizbare Medienleitung 1 zu entnehmen, auf deren weitere Konfektionierung nachstehend noch näher eingegangen wird.

Derartige Reste von Fixiermittel, hier Kleberreste, verbleiben üblicherweise nach dem Abziehen der Fixiereinrichtung 6 auf der Außenseite 20 der rohrförmigen Medienleitung 2, wenn die Fixiereinrichtung 6 mit ihrer adhäsiven Oberfläche 60 direkt mit der Außenseite 20 der rohrförmigen Medienleitung 2 verklebt wird. Dies wird durch das Zwischenfügen des hochtemperaturfesten Folienelementes 3 zwischen die Fixiereinrichtung 6 und die Außenseite 20 der rohrförmigen Medienleitung 2 jedoch vermieden. Dementsprechend ist zum Konfektionieren der beheizbaren Medienleitung 1 es lediglich erforderlich, das hochtemperaturfeste Folienelement 3 zu entfernen, da hiermit auch das darauf befestigte Klebeband bzw. die Fixiereinrichtung 6 mit abgezogen wird. Die beiden Heizelemente 4,5 können dort dann mit elektrischen Zuleitungen verbunden werden, um diese an eine Energiequelle anschließen zu können bzw. können dort mit anderen Heizelementen, die beispielsweise einen Leitungsverbinder umgeben, verbunden werden, insbesondere durch Crimpen.

Das hochtemperaturfeste Folienelement 3 kann beispielsweise durch eine Wendelwickelanlage auf die rohrförmige Medienleitung 2 aufgebracht werden. Um ein späteres Formbiegen der konfektionierten beheizbaren Medienleitung oder auch bereits beheizbaren Medienleitung ertragen zu können, ist das Folienelement 3 hochtemperaturfest, besteht also aus einem Material, das für hohe Temperaturen, wie insbesondere Temperaturen von über 100 °C geeignet ist. Beim Formbiegen wird die Leitung in einem Ofen auf eine Temperatur von etwa 150 °C erwärmt, in Form gelegt und nachfolgend abgekühlt, so dass sich hier insbesondere Materialien für das Folienelement eignen, die diese Temperaturen ertragen. Das hochtemperaturfeste Folienelement kann dementsprechend beispielsweise aus PET, also Polyethylenterephthalat, bestehen. Es kann insbesondere eine Materialdicke von 20 µm und einer Schrumpfrate von mehr als 0,5%, insbesondere mehr als 1,5%, vorzugweise 2%, bei 150 °C aufweisen.

In der Figur 2 ist eine Ausführungsvariante der beheizbaren Medienleitung 1 gezeigt, die hier bereits von einem Hüllrohr 7 außenseitig umgeben ist. Das Hüllrohr 7 kann insbesondere als Wellrohr ausgebildet sein. Es dient dem außenseitigen Isolieren der beheizbaren Medienleitung, wobei zu diesem Zweck ein Luftvolumen 8 zwischen der beheizbaren Medienleitung 1 und dem Hüllrohr 7 eingeschlossen ist, das der Isolation dient. Bei der in Figur 2 gezeigten Ausführungsvariante ist das hochtemperaturfeste Folienelement 3 über den Heizelementen 4, 5, die ihrerseits die rohrförmige Medienleitung 2 umgebend angeordnet sind, angeordnet. Bei der Herstellung der beheizbaren Medienleitung 1 sind somit zunächst die rohrförmige Medienleitung 2 mit den beiden Heizelementen 4, 5 bewickelt und nachfolgend das hochtemperaturfeste Folienelement 3 außenseitig auf die mit den beiden Heizelementen 4,5 umwickelte rohrförmige Medienleitung 2 aufgebracht. Insbesondere wird das Folienelement 3 hierbei spiralförmig gewickelt so eng anliegend aufgebracht, dass die bei der Bewicklung der rohrförmigen Medienleitung 2 mit den beiden Heizelementen 4,5 für diese vorgegebene Positionierung durch das Folienelement 3 fixiert werden kann. Das hochtemperaturfeste Folienelement 3 dient bei der Ausführungsvariante nach Figur 2 somit als Fixiereinrichtung, so dass eine zusätzliche Fixiereinrichtung insbesondere in Form eines Klebebandes hier entfallen kann.

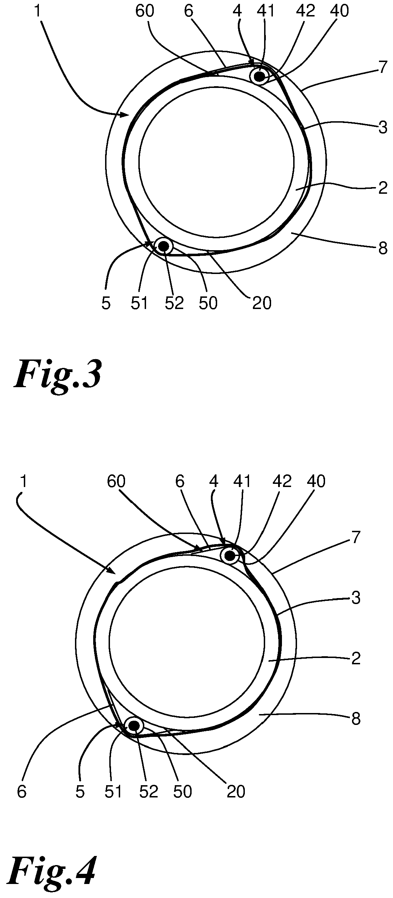

Bei der in Figur 3 gezeigten beheizbaren Medienleitung 1 ist wiederum das hochtemperaturfeste Folienelement 3 außenseitig auf der mit den beiden Heizelementen 4,5 außenseitig bewickelten rohrförmigen Medienleitung 2 angeordnet. Insbesondere ist das Folienelement 3 dabei lose als die Heizelemente 4 und 5 sowie die rohrförmige Medienleitung 2 überdeckend angeordnet. Das Folienelement 3 kann wiederum entweder spiralförmig gewickelt oder axial gefaltet eingezogen auf der Außenseite der Heizelemente 4,5 und der rohrförmigen Medienleitung 2 angeordnet sein. Außenseitig das hochtemperaturfeste Folienelement 3 zumindest teilweise umgebend ist die Fixiereinrichtung 6 insbesondere in Form eines Klebe-, Gewebe- oder Gewebeklebebandes aufgebracht, wobei die adhäsive Oberfläche 60 der Fixiereinrichtung 6 in Richtung des hochtemperaturfesten Folienelements 3 weist und mit diesem adhäsiv verbunden bzw. verklebt ist. Auch bei dieser Ausführungsvariante ist es möglich, dass die adhäsive Oberfläche 60 der Fixiereinrichtung 6 die Außenseite 20 der rohrförmigen Medienleitung 2 und hier ebenfalls die jeweilige Außenseite 40,50 der beiden Heizelemente 4,5 nicht berührt. Die beiden Heizelemente 4,5 weisen jeweils eine Isolationsummantelung 41 bzw. 51 auf, die eine innere Heizlitze 42,52 außenseitig umgibt. Dementsprechend liegt das hochtemperaturfeste Folienelement 3 auf der Außenseite 40 bzw. 50 der beiden Heizelemente 4,5 und auf der Außenseite 20 der rohrförmigen Medienleitung 2 an.

Als Variation zu der in Figur 3 gezeigten Ausführungsvariante kann weiterhin das hochtemperaturfeste Folienelement 3 außenseitig auf der rohrförmigen Medienleitung und den beiden Heizelementen 4,5 axial gefaltet eingezogen angeordnet sein. Die insbesondere in Form eines Klebebandes oder Gewebebandes oder Gewebeklebebandes ausgebildete Fixiereinrichtung 6 kann ferner außenseitig axial eingeführt und in Längsrichtung der rohrförmigen Medienleitung 2 mit einer Steigung von bis zu 60 mm mit dem hochtemperaturfesten Folienelement 3 verklebt sein. Das Folienelement wird hierbei zunächst axial gefaltet eingezogen und auf der Außenseite der mit den Heizelementen 4,5 bewickelten rohrförmigen Medienleitung angeordnet und nachfolgend überlappend die Fixiereinrichtung insbesondere in Form eines mit zumindest einer adhäsiven Oberfläche 60 versehenen Bandes überlappend mit der genannten Steigung gewickelt. Das Aufbringen des hochtemperaturfesten Folienelementes 3 und der Fixiereinrichtung 6 kann sequentiell nacheinander in ein und derselben Fertigungsstation oder in zwei nacheinander folgenden Stationen erfolgen.

Über die Materialdicke des hochtemperaturfesten Folienelementes und den Grat der Überlappung beim Bewickeln kann die Abriebfestigkeit eingestellt werden. Das hochtemperaturfeste Folienelement 3 bildet je nach der Dicke der Aufbringung über den Heizelementen 4,5 einen außenseitigen Schutz für diese in Bezug auf eine durch das Hüllrohr 7 gegebenenfalls erfolgende scheuernde Berührung der jeweiligen Isolationsummantelung 41 bzw. 51 der beiden Heizelemente 4,5. Gerade bei Schwingungen im Fahrzeugraum kann es zu einer Relativbewegung zwischen Hüllrohr 7 und der beheizbaren Medienleitung 1 bzw. deren Heizelementen 4,5 kommen, wodurch bei einer starken Beschädigung der Isolationsummantelung 41 bzw. 51 der beiden Heizelemente 4,5 es zu einem kurzschlussbedingten Ausfall der Beheizung der beheizbaren Medienleitung kommen kann. Durch das Aufbringen des hochtemperaturfesten Folienelementes 3 auf der Außenseite der jeweiligen Heizelemente 4, 5, also deren Isolationsummantelung 41 bzw. 51 außenseitig umgebend, können diese gegen Abrieb und somit Beschädigung geschützt werden, so dass ein noch sichererer Betrieb der Beheizung der beheizbaren Medienleitung 1 ermöglicht wird.

Figur 4 zeigt die beheizbare Medienleitung 1, bei der die rohrförmige Medienleitung 2 zunächst mit den beiden Heizelementen 4,5 außenseitig bewickelt ist. Zum Fixieren der Positionierung der Heizelemente 4,5 auf der Außenseite der rohrförmigen Medienleitung 2 ist die Fixiereinrichtung 6 insbesondere entlang den beiden Heizelementen 4,5 sich erstreckend angeordnet. Um zu vermeiden, dass Fixiermittel bzw. insbesondere Klebemittel auf die Außenseite insbesondere der rohrförmigen Medienleitung 2 gelangt, ist die adhäsive Oberfläche 60 der Fixiereinrichtung 6 in Richtung weg von der rohrförmigen Medienleitung 2 bzw. deren Außenseite 20 gerichtet. Die adhäsive Oberfläche 60 der Fixiereinrichtung 6 ist mit dem hochtemperaturfesten Folienelement 3 verklebt, das außenseitig über dieser aufgebracht ist. Das hochtemperaturfeste Folienelement 3 kann sich sowohl über der Fixiereinrichtung 6 als auch den Bereichen der Außenseite 20 der rohrförmigen Medienleitung 2 erstrecken, die nicht mit der Fixiereinrichtung 6 bewickelt bzw. versehen sind. Da die adhäsive Oberfläche 60 der Fixiereinrichtung 6 nicht in Richtung der Außenseite 20 der rohrförmigen Medienleitung 2 gerichtet ist, sondern weg von dieser, kann wiederum erfolgreich ein Aufbringen von Klebemitteln auf die Außenseite 20 der rohrförmigen Medienleitung 2 und auch auf die jeweilige Außenseite 40 bzw. 50 der beiden Heizelemente 4,5 bzw. von deren Isolationsummantelung 41 bzw. 51 sicher vermieden werden. Dementsprechend ist auch hier ein Entfernen der auf der Außenseite 20 der rohrförmigen Medienleitung 2 angeordneten Fixiereinrichtung 6 und des hochtemperaturfesten Folienelements 3 ohne weiteres und ohne Rückstände von Fixier- bzw. Klebemitteln auf der Außenseite 20 der rohrförmigen Medienleitung 2 möglich. Auch bei dieser Ausführungsvariante ist es wiederum möglich, eine Perforation, insbesondere eine Zackenperforation, an den Schnittkanten des Folienelementes 3 vorzusehen, um das Folienelement leichter manuell abtrennen und von der Außenseite der rohrförmigen Medienleitung 2 entfernen zu können, um diese insbesondere durch Laserschweißen mit einem Leitungsverbinder verbinden zu können.

Auch bei der in Figur 4 gezeigten Ausführungsvariante ist wiederum außenseitig um die beheizbare Medienleitung 1 herum das Hüllrohr 7, das das Luftvolumen 8 zwischen der Außenseite der beheizbaren Medienleitung 1 und dem Hüllrohr 7 einschließt, zur außenseitigen Isolierung der beheizbaren Medienleitung vorgesehen. Das Hüllrohr 7 wird beim Konfektionieren der Medienleitung vorteilhaft auf dieser mit aufgebracht, kann auf diese axial aufgeschoben oder bei Vorsehen eines geschlitzten Hüllrohres radial aufgebracht werden.

Die Herstellung der beheizbaren Medienleitung kann in einem Endlosprozess erfolgen, wobei die rohrförmige Medienleitung 2 von einer Bevorratungsspule abgewickelt und je nach gewünschter Ausführungsvariante mit den Heizelementen 4,5 sowie dem hochtemperaturfesten Folienelement 3 und ggf. der Fixiereinrichtung 6 versehen bzw. umwickelt wird. Nach dem Ablängen der so vorbereiteten beheizbaren Medienleitung 1 in der gewünschten Länge wird zum Verbinden der beheizbaren Medienleitung 1 mit einem Leitungsverbinder ein endseitiger Abschnitt der beheizbaren Medienleitung bis zur Außenseite 20 der rohrförmigen Medienleitung 2 freigelegt, also Folienelement 3 und Fixiereinrichtung 6 dort entfernt und auch die Heizelemente 4,5 von dort abgewickelt, um nachfolgend eine insbesondere Laserschweißverbindung mit dem Leitungsverbinder vorsehen zu können. Dies ist in Figur 5 zu sehen. Gestrichelt dargestellt ist in Figur 5 hierbei die abgetrennte Überlänge 10 der rohrförmigen Medienleitung. Diese kann unterschiedlich sein, in Abhängigkeit vom jeweiligen Anwendungsfall. Der Abschnitt 10 ist daher mit einer Anzahl von gestrichelt dargestellten Längsunterteilungen 110 versehen, um dieses anzudeuten, an denen ein Trennen erfolgen könnte bzw. die die dann jeweils vorgesehene Überlänge veranschaulichen. Gezeigt ist ferner die freigelegte rohrförmige Medienleitung 2. Auf dieser ist zum Fixieren des Endes des abgewickelten Folienelementes 3 und der teilabgewickelten Heizelemente 4, 5 ein erstes adhäsives Fixierband 11 durch Umwickeln aufgebracht. Dieses ist auf dem Folienelement 3 mit darunter angeordneten Heizelementen 4, 5, die auf der rohrförmigen Medienleitung 2 aufliegen, angeordnet. Direkt benachbart zu dem ersten adhäsiven Fixierband 11 ist ein zweites adhäsives Fixierband 12 außenseitig auf dem Folienelement 3 durch Umwickeln aufgebracht. Das zweite adhäsive Fixierband 12 ist breiter ausgebildet als das erste adhäsive Fixierband 11. Beispielsweise weist das erste adhäsive Fixierband 11 eine Breite b₁₁ von 9 mm +/- 1 mm auf, während das zweite adhäsive Fixierband 12 eine Breite von b₁₂ von 15 mm +/- 1 mm aufweisen kann. Selbstverständlich sind auch andere Abmessungen der Fixierbänder 11 und 12 möglich. Beide Fixerbänder können als Klebe-, Gewebeklebe- oder Gewebebänder ausgebildet sein. Beide dienen zur Refixierung des Folienelementes 3, also zum Verhindern eines ungewollten Lockerns und Ablösens (Flagging) des Endes des Folienelementes neben dem freigelegten Abschnitt 13 der rohrförmigen Medienleitung 2, der nachfolgend insbesondere durch Laserschweißen mit einem Leitungsverbinder verbunden werden kann.

Anstelle der beiden in Figur 5 gezeigten adhäsiven Fixierbänder 11, 12 kann auch lediglich das zweite adhäsive Fixerband 12 vorgesehen werden, wenn dieses bereits eine ausreichende Fixierung des Endes des Folienelementes 3 nach dem Ablängen der beheizbaren Medienleitung und Freilegen der rohrförmigen Medienleitung 2 ermöglicht.

Die beiden adhäsiven Fixierbänder 11, 12 können mehrfach um die Außenseite der mit Heizelementen 4, 5 und Folienelement 3 versehenen rohrförmigen Medienleitung gewickelt, somit an den jeweiligen Anordnungsstellen gebündelt aufgebracht werden. Die beiden adhäsiven Fixierbänder 11, 12 können im Wesentlichen ohne Abstand nebeneinander in Längsrichtung der beheizbaren Medienleitung aufgebracht werden, wobei zwischen ihnen ebenfalls ein geringer Spalt vorgesehen werden kann. Insbesondere beträgt der Abstand zwischen den beiden adhäsiven Fixierbändern 0 mm +/- 2,5 mm. Es kann somit auch eine geringfügige Überdeckung der beiden adhäsiven Fixierbänder in Längsrichtung der beheizbaren Medienleitung vorgesehen werden.

Zum Formbiegen der insbesondere konfektionierten beheizbaren Medienleitung wird diese erwärmt, insbesondere in einem Ofen, und in einer Form in die gewünschte Form gebogen, in dieser Form abgekühlt und der Form wieder entnommen. Die Erwärmung zum Formbiegen erfolgt auf eine Temperatur von etwa 150 °C.

Neben den im Vorstehenden beschriebenen und in den Figuren gezeigten Ausführungsvarianten einer beheizbaren Medienleitung sowie eines Verfahrens zum Herstellen einer solchen beheizbaren Medienleitung und einer konfektionierten Medienleitung, die eine solche beheizbare Medienleitung umfasst, können noch zahlreiche weitere Ausführungsvarianten gebildet werden, insbesondere auch beliebige Kombinationen der vorstehend genannten Merkmale, wobei stets zumindest ein hochtemperaturfestes Folienelement vorgesehen wird, um ein Anhaften von Fixiermittel, insbesondere Klebemittel, bzw. einer adhäsiven Oberfläche einer Fixiereinrichtung auf der Außenseite der rohrförmigen Medienleitung der beheizbaren Medienleitung zu verhindern. Ein solches wird dadurch verhindert, dass gar keine zusätzliche Fixiereinrichtung, die eine adhäsive Oberfläche trägt, mehr erforderlich ist, sondern das hochtemperaturfeste Folienelement selbst die Fixierfunktion für das zumindest eine Heizelement, das auf der rohrförmigen Medienleitung angeordnet wird, übernimmt.

### Bezugszeichenliste

- 1: beheizbare Medienleitung
- 2: rohrförmige Medienleitung
- 3: hochtemperaturfestes Folienelement
- 4: Heizelement
- 5: Heizelement
- 6: Fixiereinrichtung
- 7: Hüllrohr
- 8: Luftvolumen
- 10: Überlänge von 2
- 11: erstes abhäsives Fixierband
- 12: zweites adhäsives Fixierband
- 13: Abschnitt von 2
- 20: Außenseite von 2
- 40: Außenseite
- 41: Isolationsummantelung
- 42: Heizlitze
- 50: Außenseite
- 51: Isolationsummantelung
- 52: Heizlitze
- 60: adhäsive Oberfläche
- 110: Längsunterteilungen

## Patentansprüche

1. Beheizbare Medienleitung (1) mit einer rohrförmigen Medienleitung (2), zumindest einem Heizelement (4,5) in außenseitiger Anordnung auf der rohrförmigen Medienleitung (2) und zumindest einer Fixiereinrichtung zum Fixieren der Position des zumindest einen Heizelements (4,5) auf der Außenseite (20) der rohrförmigen Medienleitung (2), wobei zumindest ein hochtemperaturfestes Folienelement (3) aus einem Polymermaterial, das beschädigungsfrei Temperaturen von 150 °C und mehr aussetzbar ist, vorgesehen ist zum Verhindern des Anhaftens von Fixiermittel auf der Außenseite (20) der rohrförmigen Medienleitung (2), wobei das hochtemperaturfeste Folienelement (3) auf der Außenseite (20) der mit dem zumindest einen Heizelement (4,5) bewickelten rohrförmigen Medienleitung (2) angeordnet ist, wobei das hochtemperaturfeste Folienelement (3) als Fixiereinrichtung zum Fixieren des zumindest einen Heizelementes (4,5) auf der Außenseite (20) der rohrförmigen Medienleitung (2) dient.

2. Beheizbare Medienleitung (1) nach Anspruch 1,
**dadurch gekennzeichnet, dass**
das hochtemperaturfeste Folienelement (3) eine Materialdicke von 20 µm und eine Schrumpfrate bei 150 °C von > 0,5 %, insbesondere > 1,5 %, vorzugsweise 2 % aufweist.

3. Beheizbare Medienleitung (1) nach Anspruch 1 oder 2,
**dadurch gekennzeichnet, dass**
das hochtemperaturfeste Folienelement (3) aus Polyethylenterephthalat (PET) besteht.

4. Beheizbare Medienleitung (1) nach Anspruch 3,
**dadurch gekennzeichnet, dass**
das hochtemperaturfeste Folienelement (3) aus Polyethylenterephthalat transparent und biaxial orientiert ist.

5. Beheizbare Medienleitung (1) nach einem der vorstehenden Ansprüche, **dadurch gekennzeichnet, dass**
endseitig oder endseitig und im mittleren Bereich der mit dem zumindest einen Heizelement (4, 5) und dem zumindest einen hochtemperaturfesten Folienelement (3) versehenen rohrförmigen Medienleitung (2) eine Fixierung des hochtemperaturfesten Folienelements (3) durch zumindest ein adhäsives Fixierband (11, 12) vorgesehen ist.

6. Konfektionierte Medienleitung mit zumindest einer Medienleitung (1) nach einem der vorstehenden Ansprüche und mit zumindest einem endseitig mit dieser verbundenen Leitungsverbinder.

7. Verfahren zum Herstellen einer beheizbaren Medienleitung (1) nach einem der Ansprüche 1 bis 5, wobei zumindest eine rohrförmige Medienleitung (2) mit zumindest einem Heizelement (4,5) außenseitig bewickelt wird, wobei auf der Außenseite (20) der rohrförmigen Medienleitung (2) über der Bewicklung von dieser mit dem zumindest einen Heizelement (4,5) zumindest ein hochtemperaturfestes Folienelement (3) aus einem Polymermaterial, das beschädigungsfrei Temperaturen von 150 °C und mehr aussetzbar ist, aufgebracht wird.

8. Verfahren nach Anspruch 7,
**dadurch gekennzeichnet, dass**
das hochtemperaturfeste Folienelement (3) durch spiralförmiges Wickeln und/oder axial gefaltet eingezogen auf der rohrförmigen Medienleitung (2) über der Heizelementbewicklung (4,5) aufgebracht wird.

9. Verfahren nach Anspruch 7,
**dadurch gekennzeichnet, dass**
ein gesonderter Prozessschritt vorgesehen ist, um bei Weglassen einer zusätzlichen Fixiereinrichtung die Positionierung des zumindest einen Heizelements (4,5) auf der Außenseite der rohrförmigen Medienleitung (2) zu fixieren, wobei das zumindest eine hochtemperaturfeste Folienelement (3) auf Heizelement (4,5) und rohrförmige Medienleitung (2) aufgeschrumpft und dementsprechend eng an die Außenseite (20) des zumindest einen Heizelements (4,5), insbesondere von dessen Isolierummantelung (41, 51), und der rohrförmigen Medienleitung (2) angelegt wird.

10. Verfahren nach Anspruch 9,
**dadurch gekennzeichnet, dass**
die Schrumpfrate des hochtemperaturfesten Folienelementes (3) dahingehend angepasst ist, dass eine ausreichende Materialstärke nach dem Schrumpfen verbleibt, um eine ausreichende Abriebfestigkeit bei einem auf dem hochtemperaturfesten Folienelement (3) scheuernden Hüllrohr (7) sicherzustellen, das zur außenseitigen Isolierung der beheizbaren Medienleitung (1) vorgesehen wird.

11. Verfahren nach einem der Ansprüche 7 bis 10,
**dadurch gekennzeichnet, dass**
zum Verbinden der beheizbaren Medienleitung (1) mit einem Leitungsverbinder, also zum Konfektionieren der Medienleitung, die auf einer Spule bevorratete rohrförmige Medienleitung (2) mit Heizelement(en) (4,5) und hochtemperaturfestem Folienelement (3) versehen als beheizbare Medienleitung (1) vorkonfektioniert, auf eine gewünschte Länge abgelängt, das Folienelement (3) endseitig von der rohrförmigen Medienleitung (2) entfernt, der Leitungsverbinder aufgefügt und durch Laserschweißen dort befestigt wird.

12. Verfahren nach Anspruch 11,
**dadurch gekennzeichnet, dass**
das zumindest eine hochtemperaturfeste Folienelement (3) zum erleichterten Entfernen mit einer Perforation im Bereich von Schnittkanten vorgesehen wird, um ein besseres manuelles Abtrennen eines Abschnitts des hochtemperaturfesten Folienelements (3) im Endbereich bzw. an den Enden der rohrförmigen Medienleitung (2) zu ermöglichen.

## Claims

1. Heatable media line (1) having a tubular media line (2), at least one heating element (4, 5) arranged externally on the tubular media line (2), and at least one fixing device for fixing the position of the at least one heating element (4, 5) on the outside (20) of the tubular media line (2),
wherein, in order to prevent fixing agent from adhering to the outside (20) of the tubular media line (2), there is provided at least one high-temperature-resistant film element (3) made of a polymer material which can be exposed to temperatures of 150°C or more without being damaged, wherein the high-temperature-resistant film element (3) is arranged on the outside (20) of the tubular media line (2) around which the at least one heating element (4, 5) is wound, wherein the high-temperature-resistant film element (3) serves as the fixing device for fixing the at least one heating element (4, 5) to the outside (20) of the tubular media line (2).

2. Heatable media line (1) according to claim 1,
**characterised in that**
the high-temperature-resistant film element (3) has a material thickness of 20 µm and a shrinkage rate at 150°C of > 0.5%, in particular > 1.5%, preferably 2%.

3. Heatable media line (1) according to claim 1 or 2,
**characterised in that**
the high-temperature-resistant film element (3) consists of polyethylene terephthalate (PET).

4. Heatable media line (1) according to claim 3,
**characterised in that**
the high-temperature-resistant film element (3) made of polyethylene terephthalate is transparent and biaxially oriented.

5. Heatable media line (1) according to any one of the preceding claims,
**characterised in that**
at the end or at the end and in the middle region of the tubular media line (2) provided with the at least one heating element (4, 5) and the at least one high-temperature-resistant film element (3), fixing of the high-temperature-resistant film element (3) is provided by at least one adhesive fixing tape (11, 12).

6. Prefabricated media line having at least one media line (1) according to any one of the preceding claims and having at least one line connector connected thereto at the end.

7. Method for producing a heatable media line (1) according to any one of claims 1 to 5, wherein at least one heating element (4, 5) is wound externally around at least one tubular media line (2),
wherein at least one high-temperature-resistant film element (3) made of a polymer material which can be exposed to temperatures of 150°C or more without being damaged is applied to the outside (20) of the tubular media line (2) over the at least one heating element (4, 5) wound thereon.

8. Method according to claim 7,
**characterised in that**
the high-temperature-resistant film element (3) is applied to the tubular media line (2) over the heating element winding (4, 5) by spiral winding and/or such that it is pulled in in an axially folded manner.

9. Method according to claim 7,
**characterised in that**
a separate process step is provided in order to fix the positioning of the at least one heating element (4, 5) on the outside of the tubular media line (2) if an additional fixing means is omitted, wherein the at least one high-temperature-resistant film element (3) is shrunk onto the heating element (4, 5) and the tubular media line (2) and accordingly is applied tightly against the outside (20) of the at least one heating element (4, 5), in particular of the insulating covering (41, 51) thereof, and of the tubular media line (2).

10. Method according to claim 9,
**characterised in that**
the shrinkage rate of the high-temperature-resistant film element (3) is adapted such that sufficient material thickness remains after shrinkage to ensure sufficient wear resistance if a cladding tube (9) provided for externally insulating the heatable media line (1) rubs against the high-temperature-resistant film element (3).

11. Method according to any one of claims 7 to 10,
**characterised in that**
in order to connect the heatable media line (1) to a line connector, that is to say in order to prefabricate the media line, the tubular media line (2) stored on a spool, provided with heating element(s) (4, 5) and the high-temperature-resistant film element (3), prefabricated as a heatable media line (1), is cut to a desired length, the film element (3) is removed from the tubular media line (2) at the end, and the line connector is attached and fastened there by laser welding.

12. Method according to claim 11,
**characterised in that**
in order to facilitate its removal, the at least one high-temperature-resistant film element (3) is provided with a perforation in the region of cut edges, so as to permit better manual separation of a portion of the high-temperature-resistant film element (3) in the end region, or at the ends, of the tubular media line (2).

## Revendications

1. Conduite de fluide (1) chauffante avec une conduite de fluide tubulaire (2), au moins un élément chauffant (4, 5) en disposition extérieure sur la conduite de fluide tubulaire (2) et au moins un dispositif de fixation pour fixer la position de l'au moins un élément chauffant (4, 5) sur le côté extérieur (20) de la conduite de fluide tubulaire (2),
dans laquelle au moins un élément de film résistant aux hautes températures (3) composé d'un matériau polymère, qui peut être exposé sans détérioration à des températures supérieures ou égales à 150 °C, est prévu pour empêcher l'adhérence de moyens de fixation sur le côté extérieur (20) de la conduite de fluide tubulaire (2), dans laquelle l'élément de film résistant aux hautes températures (3) est disposé sur le côté extérieur (20) de la conduite de fluide tubulaire (2) entourée avec l'au moins un élément chauffant (4, 5), dans laquelle l'élément de film résistant aux hautes températures (3) sert de dispositif de fixation pour fixer l'au moins un élément chauffant (4, 5) sur le côté extérieur (20) de la conduite de fluide tubulaire (2).

2. Conduite de fluide (1) chauffante selon la revendication 1,
**caractérisée en ce que**
l'élément de film résistant aux hautes températures (3) présente une épaisseur de matériau de 20 µm et un taux de retrait à 150 °C > 0,5 %, en particulier > 1,5 %, de préférence de 2 %.

3. Conduite de fluide (1) chauffante selon la revendication 1 ou 2,
**caractérisée en ce que**
l'élément de film résistant aux hautes températures (3) est constitué de polyéthylène téréphtalate(PET).

4. Conduite de fluide (1) chauffante selon la revendication 3,
**caractérisée en ce que**
l'élément de film résistant aux hautes températures (3) composé de polyéthylène téréphtalate est transparent et orienté de manière bi axiale.

5. Conduite de fluide (1) chauffante selon l'une quelconque des revendications précédentes,
**caractérisée en ce que**
côté extrémité ou côté extrémité et dans la zone centrale de la conduite de fluide tubulaire (2) pourvue de l'au moins un élément chauffant (4, 5) et de l'au moins un élément de film résistant aux hautes températures (3) une fixation de l'élément de film résistant aux hautes températures (3) est prévue par au moins une bande de fixation adhésive (11, 12).

6. Conduite de fluide confectionnée avec au moins une conduite de fluide (1) selon l'une quelconque des revendications précédentes et avec au moins un raccord de conduite relié côté extrémité à celle-ci.

7. Procédé pour fabriquer une conduite de fluide (1) chauffante selon l'une quelconque des revendications 1 à 5, dans lequel au moins une conduite de fluide tubulaire(2) est entourée côté extérieur avec au moins un élément chauffant (4, 5),
dans lequel au moins un élément de film résistant aux hautes températures (3) composé d'un matériau polymère, qui peut être exposé sans détérioration à des températures supérieures ou égales à 150 °C, est appliqué sur le côté extérieur (20) de la conduite de fluide tubulaire (2) par l'enroulement autour de celle-ci avec l'au moins un élément chauffant (4, 5).

8. Procédé selon la revendication 7,
**caractérisé en ce que**
l'élément de film résistant aux hautes températures (3) est appliqué sur la conduite de fluide tubulaire (2) au-dessus du résultat d'avoir entouré celle-ci avec l'élément chauffant (4, 5) par enroulement en spirale et/ou en étant inséré de manière pliée axialement.

9. Procédé selon la revendication 7,
**caractérisé en ce que**
une étape de processus séparée est prévue, afin de fixer le positionnement de l'au moins un élément chauffant (4, 5) sur le côté extérieur de la conduite de fluide tubulaire (2) lorsqu'un dispositif de fixation additionnel est omis, dans lequel l'au moins un élément de film résistant aux hautes températures (3)est rétracté sur l'élément chauffant (4, 5) et la conduite de fluide tubulaire (2) et de manière correspondante est placé étroitement sur le côté extérieur (20) de l'au moins un élément chauffant (4, 5), en particulier de la gaine isolante (41, 51) de celui-ci, et de la conduite de fluide tubulaire (2).

10. Procédé selon la revendication 9,
**caractérisé en ce que**
le taux de retrait de l'élément de film résistant aux hautes températures (3) est adapté en ce sens qu'il reste une épaisseur de matériau suffisante après le retrait, afin d'assurer une résistance à l'abrasion suffisante lorsqu'un tube de gainage (7), qui est prévu pour l'isolation côté extérieur de la conduite de fluide (1) chauffante, frotte sur l'élément de film résistant aux hautes températures (3).

11. Procédé selon l'une quelconque des revendications 7 à 10,
**caractérisé en ce que**
pour relier la conduite de fluide (1) chauffante à un raccord de conduite, par conséquent pour confectionner la conduite de fluide, la conduite de fluide tubulaire (2) stockée sur une bobine, pourvue d'élément(s) chauffant(s) (4, 5) et d'un élément de film résistant aux hautes températures (3), est pré-confectionnée en tant que conduite de fluide (1) chauffante, mise à la longueur souhaitée, l'élément de film (3) est retiré côté extrémité de la conduite de fluide tubulaire (2), le raccord de conduite est monté et y est fixé par soudage laser.

12. Procédé selon la revendication 11,
**caractérisé en ce que**
l'au moins un élément de film résistant aux hautes températures (3) pour un retrait facilité est pourvu d'une perforation dans la zone débords de coupe, afin de permettre une meilleure séparation manuelle d'une section de l'élément de film résistant aux hautes températures (3) dans la zone d'extrémité ou sur les extrémités de la conduite de fluide tubulaire (2).
